# EUROPEAN PATENT SPECIFICATION

(11) **EP 1 865 731 B1**
(45) Date of publication and mention of the grant of the patent: **13.06.2012**
(21) Application number: 06722172.1
(22) Date of filing: 28.03.2006
(51) Int. Cl.: H04W 4/14

(54) **A METHOD FOR REALIZING SHORT MESSAGE CALLED SERVICE AND A SHORT MESSAGE PROCESS SYSTEM**
VERFAHREN ZUR REALISIERUNG EINES KURZNACHRICHTEN-ANRUFDIENSTES UND KURZNACHRICHTEN-PROZESSSYSTEM
PROCEDE POUR REALISER UN SERVICE DE MESSAGES COURTS (SMS) ET SYSTEME DE TRAITEMENT DE MESSAGES COURTS

(30) Priority: 28.03.2005 CN 200510059318
(43) Date of publication of application: 12.12.2007
(73) Proprietor: Huawei Technologies Co., Ltd., Shenzhen, Guangdong Province 518129 (CN)
(72) Inventor: HOU, Xiaolong, Huawei Administration Building, Shenzhen, Guangdong Province 518129 (CN)
(74) Representative: Thun, Clemens
(86) International application number: PCT/CN2006/000520
(87) International publication number: WO 2006/102837

(56) References cited:
- WO-A-98/32300
- WO-A1-00/47004
- WO-A1-99/57926
- CN-A- 1 387 342
- CN-A- 1 484 464
- US-A1- 2004 005 901
- US-A1- 2004 180 678
- US-A1- 2005 003 838
- GALLAGHER M D ET AL: "Mobile Telecommunications Networking with IS-41", MOBILE COMMUNICATIONS NETWORKING WITH IS-41, XX, XX, 1 January 1997 (1997-01-01), pages 285-310, XP002113135,

## Description

### Field of the Invention

The present invention relates to the field of communications, in particular, to a method and system for short message called service.

### Background of the Invention

Short message service is a common data service of the present GSM (Global System for Mobile communications) network. As mobile phones become more and more popular, short message service develops rapidly. For most of the mobile users, short message has become the most common communication method next to Voice. The requirement of carriers on short message service increases.

At present, the GSM network short message systems are all of a calling home mode, in other words, the receiving and delivering of short messages all take place in an SMSC (Short Message Service Center) to which the calling user is homed. Each city has one or more SMSCs, which are responsible for receiving short messages submitted by local users. The local SMSCs are responsible for sending short messages submitted by local users to other users in any place.

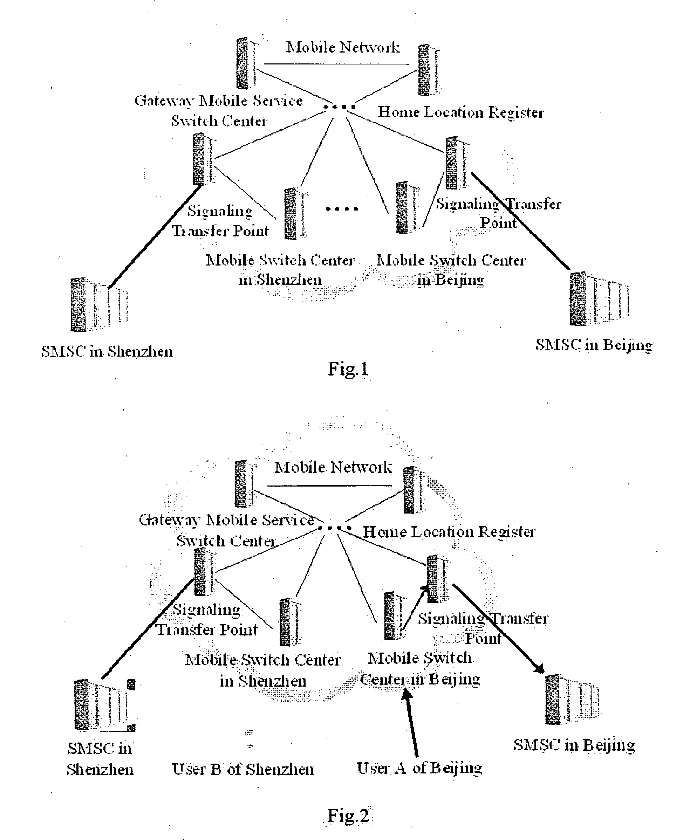

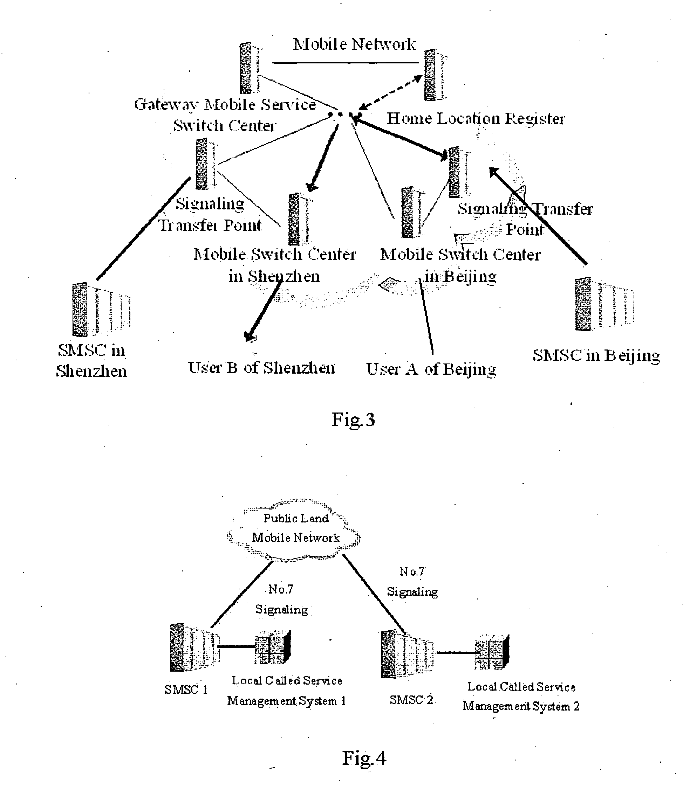

For example, each of Beijing and Shenzhen has an SMSC, which is responsible for receiving short messages submitted by users of Beijing and Shenzhen respectively, and a networking structure of the SMSCs is shown in Figure 1. Figure 2 is a schematic diagram showing a process of User A in Beijing, submits a short message to User B in Shenzhen. As shown in Figure 3, User A in Beijing submits the short message to the SMSC in Beijing, and the SMSC in Beijing attempts to send the short message to User B in Shenzhen after receiving the short message. The SMSC in Beijing obtains the current location of the User B in Shenzhen, i.e. the MSC (Mobile Switch Center) to which User B is homed, from an HLR (Home Location Register), and sends the short message submitted by User A in Beijing to the MSC to which User B is homed in Shenzhen, and then, the MSC sends the short message to User B in Shenzhen. Therefore, the short messages received by User B in Shenzhen are delivered by SMSCs in every place.

However, short message called service cannot be carried out according to the technical solution of the existing calling home mode. Similarly, Spam short messages which users complain about much cannot be reduced effectively, and the waste of network resource caused by Spam short messages cannot be reduced, either. The reasons lie in that: presently, carriers of each country all have a plurality of SMSCs, for example, carriers of China have at least more than one hundred SMSCs, and these SMSCs are provided by different manufacturers; if a mobile user wants to define receiving strategies according to time, calling user and so on, then all of the SMSCs are required to support the receiving strategies defined by users in every place, which will inevitably cause the problem of the occupation and waste of resources.

WO 98/32300 discloses a method and system for delivering a messages in a radiocommunication system. In an exemplary system, messages which originate at a mobile unit are routed through both a service center associated with the originating mobile and a service center associated with a recipient mobile. If the recipient has subscribed to an enhanced message routing service, then the home location register returns an address of the recipient's service center in response to a request for routing information.

US 2004/0005901 discloses a system for transmitting short messages between mobile communication systems including a first mobile communication system which is based on a first mobile communication standard, a first short message service centre connected to the first mobile communication system, a second mobile communication system based on a second mobile communication standard, a second short message service centre connected to the second mobile communication system, a home location register connected to the second mobile communication system, a mobile services switching centre connected to the second mobile communication system, and a gateway for communications with and between the first and second mobile communication system.

US 2004/0180678 discloses systems and methods for exchanging a short message service message between networks operating in accordance with different standards. An intermediary system operates between a first network operating in accordance with a first standard and a second network operating in accordance with a second standard. A routing information request for an SMS message is received, at the intermediary, from the first network and the intermediary sends, in response to the routing information request, an acknowledgement message to the first network. The SMS message is thereafter received at the intermediary and an acknowledgement of receipt of the SMS message is generated in the intermediary and then sent to the first network. The SMS message is then sent from the intermediary to the second network. WO 99/57926 A1 discloses a system for routing short messages between message centers provides that message are first checked to see if they are to be handled by the local message center, and then routed, if appropriate, to another message center using point code or global title translation routing.

XP-0021131135 discusses the IS-41-C mobile telecommunications network functions related to short message service.

### Summary of the Invention

A main object of the present invention provide a method and system for short message called service, by means of which short message called service may be carried out easier. Said object is achieved by the method and system of respective independent claims 1 and 8.

The method for short message called service of claim 1, includes:

A) sending a short message to a called user by a calling user, wherein the short message is submitted to an SMSC to which the calling user is homed;

B) checking whether the called user is a local user by the SMSC to which the calling user is homed, and if not, forwarding, by the SMSC to which the calling user is homed, the short message to an SMSC to which the called user is homed in signaling, wherein a destination address, an address of the SMSC to which the calling user is homed and the short message identification is carried in the signaling;

C) querying the called service corresponding to the called user and processing the short message according to a query result after receiving the short message by the SMSC to which the called user is homed;
generating, by the SMSC to which the called user is homed, a status report and sending the status report carrying the short message identification to the SMSC to which the calling user is homed according to the address of the SMSC to which the calling user is homed; and
searching, by the SMSC to which the calling user is homed, the corresponding short message according to the short message identification and processing corresponding short message.

A called service management system is established for the called user, which is configured to store the called service information of the called user. The process of querying the called service and processing the short message therefore further includes:

sending a query request for querying the called information of the called user to a called service management system by the SMSC to which the called user is homed;

querying the service information of the called user according to the request and returning the query result to the SMSC to which the called user is homed by the called service management system; and

triggering, by the SMSC to which the called user is homed, a called service for processing the short message according to the query result; and
wherein if blacklist information is contained in the service information of the called user, the called service management system queries the blacklist information and determines whether the calling user is in the blacklist information; if yes, the short message is blocked from being delivered by the SMSC to which the called user is homed, otherwise the short message is delivered after its content is filtered according to filter conditions.

Preferably, in process B, the SMSC to which the calling user is homed forwards a short message to the SMSC to which the called user is homed in signaling, a destination address being carried in the signaling.

In the process B, a short message is forwarded to the SMSC to which the called user is homed in MO mode; or the short message is forwarded to the SMSC to which the called user is homed in MT mode.

If the SMSC to which the calling user is homed employs trunking mode, the signaling in process B further carries an identification code of the SMSC to which the calling user is homed; in the process of querying the called service and processing the short message, the SMSC to which the called user is homed sends a status report to the SMSC to which the calling user is homed according to the address of the SMSC to which the calling user is homed and the identification code of the SMSC to which the calling user is homed.

The process of processing the short message by the SMSC to which the called user is homed includes sending the short message to the mobile phone of the called user which is called by the calling user, or to a forwarded mobile phone or a fixed phone number, or an E-MAIL mailbox, a voice mailbox or a facsimile apparatus specified by the called user, or filtering out or blocking the short message from being forwarded.

In the process of forwarding the short message to an SMSC to which the called user is homed, a short message forwarding gateway is set between the SMSC to which the calling user is homed and the SMSC to which the called user is homed, and the SMSC to which the calling user is homed and the SMSC to which the called user is homed interact with the short message forwarding gateway via IP network. Then the process B further includes checking whether the called user is a local user by the SMSC to which the calling user is homed, and if not, forwarding the short message to the short message forwarding gateway, and sending, by the short message gateway, the short message to the SMSC to which the called user is homed.

Furthermore, A short message process system is provided by the invention according to claim 8 and which includes an SMSC to which the calling user is homed and an SMSC to which the called user is homed. The SMSC to which the calling user is homed is configured to check whether the called user is a local user, and if not, forward a short message to the SMSC to which the called user is homed in signaling, wherein a destination address, an address of the SMSC to which the calling user is homed and the short message identification is carried in the signaling when the called user is not a local user, and the SMSC to which the called user is homed is configured to query the called service corresponding to the called user after receiving the short message sent by the calling user to the called user, and process the short message according to the query result; the SMSC to which the called user is homed is further configured to generate a status report and send the status report carrying the short message identification to the SMSC to which the calling user is homed according to the address of the SMSC to which the calling user is homed; and the SMSC to which the calling user is homed is further configured to search the corresponding short message according to the short message identification and process the corresponding short message.

The short message process system further includes a called service management system, that is configured to receive a query request from the SMSC to which the called user is homed, query service information of the called user according to the request and return the query result to the SMSC to which the called user is homed; and the SMSC to which the called user is homed is further configured to trigger the called service for processing the short message according to the query result; and wherein if blacklist information is contained in the service information of the called user, the called service management system queries the blacklist information and determines whether the calling user is in the blacklist information; if yes, the short message is blocked from being delivered by the SMSC to which the called user is homed, otherwise the short message is delivered after its content is filtered according to filter conditions.

Preferably, the called service management system may be set independently, or it may be set together with the SMSC to which the called user is homed.

Preferably, the short message process system further includes a short message forwarding gateway, for realizing the forwarding of the short message between the SMSC to which the calling user is homed and the SMSC to which the called user is homed.

Benefits are achieved by way of the present invention over conventional techniques. The present technique can carry out short message called service by short message forwarding and called service query, i.e. the short message is processed according to the called strategy of the user, so that short message called service may be realized easily. Therefore, spam short messages may be prevented, and the waste of network resource may be reduced.

In some embodiments, signaling format is employed to realize the forwarding of a short message whose destination is not a local user, and a called service management center is added to the SMSC by modifying the sending process of the short message, for managing the called service subscribed by the user. Moreover, the invention may realize the forwarding of a short message via the existing No.7 signaling system SS7 network and the existing short message SS7 signaling protocol, without modifying the signaling network. Therefore, by using the existing signaling network, short message called service may be realized, cost and equipment investment may be saved, and the requirements of carriers may be met and the degree of the satisfaction of customers may be improved.

### Brief Description of the Drawings

Figure 1 is a networking diagram showing the sending of a short message in conventional technology;

Figure 2 is a schematic flowchart showing the submission of a short message in conventional technology;

Figure 3 is a schematic flowchart showing the delivery of a short message in conventional technology;

Figure 4 is a networking diagram according to the first embodiment of the present invention;

Figure 5 is a schematic flowchart according to the second embodiment of the present invention;

Figure 6 is a schematic flowchart showing the process in which the short message is processed according to the query result in accordance with the third embodiment of the present invention; and

Figure 7 is a networking diagram according to the fourth embodiment of the present invention.

### Detailed Description of the Embodiments

The present invention is hereinafter further described in detail in conjunction with the embodiments and the drawings.

According to an embodiment of the invention, a calling user sends a short message to a called user, and the short message is submitted to an SMSC to which the calling user is homed. The SMSC to which the calling user is homed checks whether the called user is a local user, and if not, the SMSC to which the calling user is homed forwards the short message to an SMSC to which the called user is homed. The SMSC to which the called user is homed queries the called service after receiving the short message, and processes the short message according to the query result.

The SMSC to which the calling user is homed may check whether the called user is a local user via part of the number segments of the called number.

The short message forwarding may be realized by rebuilding a signaling format among SMSCs, or by using the existing protocols of SS7 signaling network. The existing protocols of SS7 signaling network may be utilized in various ways. For example, the short message may be forwarded by Mobile Originated (MO) message, Mobile Terminated (MT) message, or by adding a field to other existing signaling formats.

The invention describes how to forward a short message to an SMSC to which the called user is homed by utilizes the existing SS7 signaling network, to make the short message to be sent to the called user delivered at the SMSC to which the called user is homed, and consequently to realize the called service easily. Figure 4 is a networking structure to realize the called service via SS7 signaling network The process to implement the called service in the networking shown in Figure 4 includes:

calling user sends a short message to a called user. The short message is submitted to an SMSC to which the calling user is homed as SMSC1 shown in Figure 4;

Checking whether the called user is a local user by the SMSC to which the calling user is homed, and if not, sending the short message to the SMSC to which the called user is homed for example the SMSC 2 shown in Figure 4 in signaling; and

Querying the called service and processing the short message according to the query result after receiving the short message by the SMSC to which the called user is homed.

In an embodiment of the invention, the mode of called short message forwarding based on SS7 signaling is forwarding a short message on the basis of altering the short message signaling process. The short message signaling employs MAP-MO-FORWARD-SHORT-MESSAGE. The processes of the scheme are as follows:

sending a short message to a called user in MO mode by a calling user. The short message is submitted to a SMSC to which the calling user is homed;

returning an MO message response by the SMSC to which the calling user is homed; and

checking whether the called user is a local user by the SMSC to which the calling user is homed, and if not, forwarding the short message to an SMSC to which the called user is homed in signaling by the SMSC to which the calling user is homed, a destination address being carried in the signaling.

In a specific embodiment, forwarding in MO mode is taken as an example. When parameters of TP layer protocol (SM_TP Short Message Transfer Layer) are filled, a message is packed and forwarded using SMS-SUBMIT command format. The forwarding may be indicated by adding an extra field to the existing message format, or may be indicated by using the reservation field in the existing message.

For example, the forwarding is indicated by a reservation command word 11 (2 bits) of TP layer protocol message command word TP_MTI (TP-Message-Type-Indicator). In GSM 03.40 protocol, a reservation command word 11(2 bits) is set in the message command word TP_MTI in the TP layer protocol. TP_MTI==0x03 may be used by the short message system to represent a forwarded short message. When an SMSC to which the called user is homed receives a command in which the TP_MTI is reservation command word 11 (2 bits), the message will be processed according to MO message. When an SMSC to which the calling user is homed employs trunking mode, the identification code of the SMSC to which the calling user is homed is required to be carried in the signaling.

The SMSC to which the called user is homed queries the called service according to the forwarded short message. If the called service is allowed to be delivered, the SMSC to which the called user is homed sends the short message to the called user according to the returned result of allowed delivery.

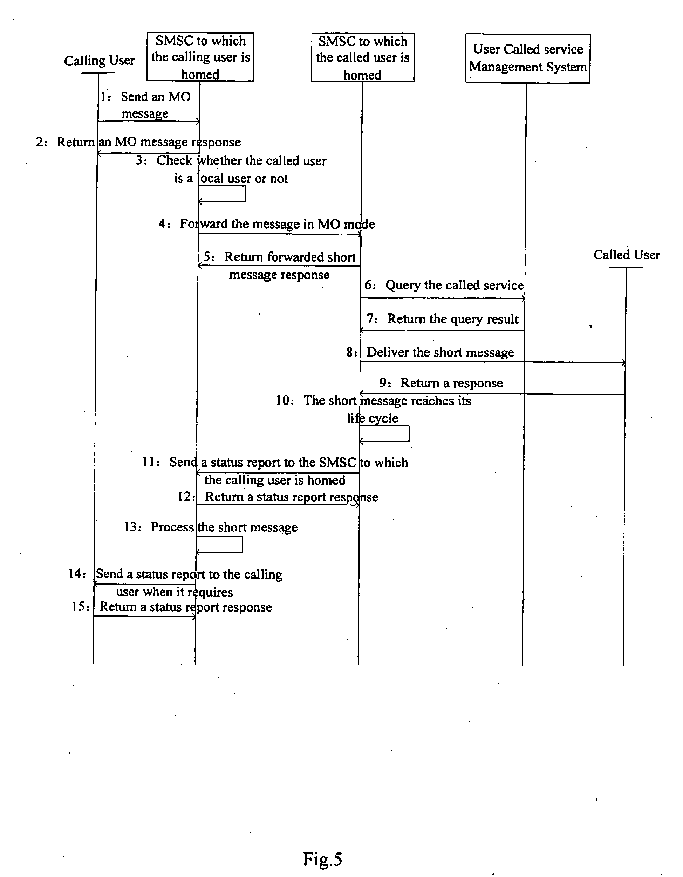

As the second embodiment of the invention, when an SMSC to which the called user is homed is required to return a short message processing status report to an SMSC to which the calling user is homed, the processes of the embodiment are shown in Figure 5:

1 a calling user sends a short message to a called user in MO mode, wherein, the short message is submitted to the SMSC to which the calling user is homed;

2 the SMSC to which the calling user is homed returns an MO message response;

3 the SMSC to which the calling user is homed checks whether the called user is a local user;

4 if not, the SMSC to which the calling user is homed forwards the short message to the SMSC to which the called user is homed in signaling. In order to return a short message processing status report to the SMSC to which the calling user is homed, the address of the SMSC to which the calling user is homed, in addition to the destination address, is required to be carried in the signaling, and the short message ID of the SMSC to which the calling user is homed is required to be identified.

The address of the SMSC to which the calling user is homed may be filled in the content of the calling field of Signaling Connection Control Part (SCCP), so that the address of the SMSC to which the calling user is homed may be carried.

The SMSC to which the calling user is homed may determine the uniqueness of a short message by using a combination of several fields of short message relay layer protocol RP(SM-RPShortMessage Relay Layer Protocol) and TP layer protocol.

For example, the uniqueness determination of a short message may be accomplished by RP_OA, RP_DA and the following fields of GSM 03.40 and GSM 09.02 protocols jointly:

| **Abbr.** | **Reference** | **P1)** | **P2)** | **Description** |
|---|---|---|---|---|
| TP-RD | TP-Reject-Duplicates | M | b | Parameter indicating whether or not the SC shall accept an SMS-SUBMIT for an SM still held in the SC which has the same TP-MR and the same TP-DA as a previously submitted SM from the same OA |
| TP-MR | TP-Message-Reference | M | I | Parameter identifying the SMS-SUBMIT. |

TP layer protocol employs an extended command. In GSM 03.40 protocol, a reservation command word 11 (2 bits) is set in the message command word TP_MTI in TP layer protocol. The short message system may use TP_MTI==0x03 to represent a forwarded short message. When the SMSC receives a command in which the TP_MTI is reservation command word 11 (2 bits), the message will be processed according to MO message (different from the specifications in GSM03.40 protocol). A short message ID from the SMSC to which the calling user is homed may be delivered to the SMSC to which the called user is homed by adding a new field. Therefore, the message ID from the SMSC to which the calling user is homed may be filled in when the SMSC to which the called user is homed returns a status report.

5 the SMSC to which the called user is homed returns a response of the forwarded message after receiving the short message;

6 the SMSC to which the called user is homed sends a request for querying the called service;

7 the SMSC to which the called user is homed processes the short message according to the returned query result;

8 if the short message is determined to be delivered, the SMSC to which the called user is homed delivers the short message to the called user;

9 the mobile phone of the called user returns an MT message response;

10 the short message reaches its life cycle;

11 the SMSC to which the called user is homed generates a status report and sends the status report to the SMSC to which the calling user is homed. When the parameters of TP layer protocol are filled in the status report, information such as short message ID, reason for failure or time and so on should be filled in TP_UD. The short message ID is generated by the SMSC to which the calling user is homed. The content format of the status report may be the similar as that in SMPP (Short Message Peer to Peer) protocol.

12 the SMSC to which the calling user is homed looks up the message according to the short message ID after receiving the status report and returns a status report response;

13 the SMSC to which the calling user is homed processes the status report;

14 if the calling user needs a status report, the SMSC to which the calling user is homed generates a status report for the calling user;

15 the calling user terminal returns a status report response.

When the SMSC to which the calling user is homed employs trunking mode, an identification code of the SMSC to which the calling user is homed is further required to be carried in the signaling, and the SMSC to which the called user is homed sends the status report to the SMSC to which the calling user is homed according to the address of the SMSC to which the calling user is homed and the identification code of the SMSC to which the calling user is homed.

In the above two embodiments, a destination address is carried in the signaling, which may be accomplished by SCCP layer. The called number or the SMSC address may be filled in the called address segment of SCCP layer.

For example, filling the called number, when an SCCP layer called parameters are filled by the SMSC, the GT (Global Title) TT (Translation Type) should be set as 128 (in the original MO information, TT=0), and a GT translation table in which TT=128 should be added to the STP.

Called GT: the MDN number of the called mobile phone, TT=128, called SSN: 8

Calling GT: the MDN number of the SMSC to which the calling user is homed, TT=0, calling SSN: 8

When the SMSC takes a route:

Called GT: the MDN number of the called mobile phone, TT=0, called SSN: 6

Calling GT: the MDN number of the SMSC to which the calling user is homed, TT=0, calling SSN: 8

The SMSC delivers an MT message directly to the MSC:

Called GT: the MDN number of the VMSC, TT=0, called SSN: 8

Calling GT: the MDN number of the SMSC to which the calling user is homed, TT=0, calling SSN: 8

For example, filling an address of the SMSC to which the called user is homed, the SMSC to which the calling user is homed reserves all the numbers of the SMSCs to which the called user is homed, and the number of the SMSC to which the called user is homed is filled by the SMSC to which the calling user is homed.

In the event that the called user number is filled, translation data should be added to the STP (Signaling Transfer Point). The number segment information of the SMSC is not required to be recorded in the SMSC. But In the event that filling the number of the SMSC to which the called user is homed, the configuration data of the signaling network is not required to be modified. However, the number segment data of all the other SMSCs should be reserved by the SMSC to which the calling user is homed and updated in time.

After the SMSC to which the called user is homed receives a short message, the SMSC to which the called user is homed may query in the called service database whether the called user sets a short message called service. If the user sets a called service, then the service is triggered, and the SMSC to which the called user is homed sends a short message to the specified location according to the service indication. The specified location may be a called user number carried in the signaling, a called user number dialed by the calling user, a forwarded mobile phone or a fixed phone number specified by the called user, and it may also be other locations such as an E-MAIL mailbox, a voice mailbox, a facsimile apparatus and so on. The short message may also be filtered or blocked from being forwarded according to such information as the calling user information, and the blacklist established by the called user or the blacklist established by the service provider.

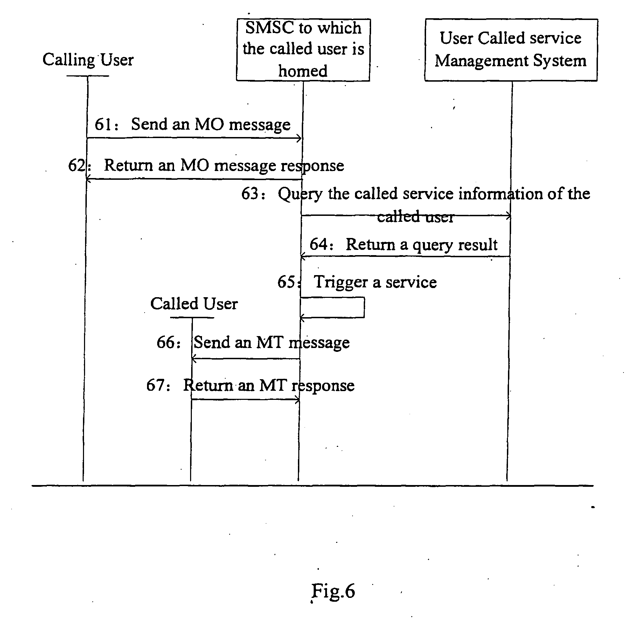

As a third embodiment of the invention, a User Called party service Management System (UCMS) may be established for the called user corresponding to the calling service management system. The UCMS system stores a list of all the users who request for the called service and other service information of the users. The called service management system may be set independently, or may be set together with the SMSC. After the SMSC to which the called user is homed receives a short message, the SMSC to which the called user is homed attempts to query the called service and processes the short message according to the query result, the specific processes are shown in Figure 6:

61 a calling user sends a short message to a called user, and the short message is submitted to an SMSC to which the calling user is homed;

62 the SMSC to which the calling user is homed returns an MO message response;

63 the SMSC to which the calling user is homed checks whether the called user is a local user. If not, the SMSC to which the calling user is homed forward the short message to the SMSC to which the called user is homed in signaling;

the SMSC to which the called user is homed sends a request to the UCMS system for querying the called service information of the called user;

64 the UCMS system queries the service information of the called user and returns the query result to the SMSC to which the called user is homed;

65 the SMSC to which the called user is homed triggers a called service according to the query result;

66, 67 after the called service is triggered, the short message is sent to the specified destination or is filtered out.

After the short message is sent to the SMSC to which the called user is homed, if the UCMS system queries the service information of the called user and finds that the called service needs to be forwarded again, for example, in the event that call forwarding service is set by the called user, then the SMSC to which the called user is homed is required to trigger the forwarding service logic for forwarding the short message. Additional information is required to be carried in the query result information returned by the UCMS system, and the fields may be extended. Two fields need to be extended in the message, one of which represents the times of forwarding of the short message, and the other of which represents the number that initiates the forwarding.

If blacklist information is contained in the service information of the called user, the UCMS system queries the blacklist information and determines whether the calling user is in the blacklist information; if yes, the short message is blocked from being delivered by the SMSC to which the called user is homed, otherwise the short message is delivered after its content is filtered according to filter conditions.

In the fourth embodiment of the invention, the SMSC to which the calling user is homed may also realize short message forwarding in IP mode. An additional set of IP network and special short message forwarding gateway is added between the SMSCs, so as to realize short message forwarding, as shown in Figure 7, the processes are as follows:

sending a short message to a called user by a calling user, wherein the short message is submitted to an SMSC to which the calling user is homed as SMSC1 shown in Figure 7;

checking whether the called user is a local user by the SMSC to which the calling user is homed, and if not, sending the short message to the short message forwarding gateway by the SMSC to which the calling user is homed. For example SMSC2 shown in Figure 7;

sending the short message to the SMSC to which the called user is homed (for example SMSC1 shown in Figure 7) according to the short message by the short message forwarding gateway; and

querying the called service according to the forwarded short message by the SMSC to which the called user is homed, sending the short message to the called user according to the returned result of allowed delivery by the SMSC to which the called user is homed If the called service is allowed to be delivered.

The embodiment also provides a charging scheme for the short message called service.

In the scheme of the SMSC to which the called user is homed, all the short messages to be sent to the called user are delivered at the SMSC to which the called user is homed. In conventional technologies, there are two charging methods of short message: Charged by Send, and Charged by Deliver.

In the case of Charged by Send, the charging is happened when the short message is submitted to the SMSC to which the calling user is homed. The charging mode of existing system is not required to be modified.

In the case of Charged by Deliver, in other words, the short message is charged after it is delivered to a mobile user successfully. After the SMSC to which the called user is homed is modified, the short message is delivered at the SMSC to which the called user is homed, while the charging point of the short message is in the SMSC to which the calling user is homed, so the SMSC to which the called user is homed should inform the SMSC to which the calling user is homed whether the short message is finally delivered to the mobile user successfully via a final status report. The SMSC to which the calling user is homed generates charging information according to the final status report received. In other words, in a situation that the SMSC to which the calling user is homed and the SMSC to which the called user is homed are not the same SMSC, when the SMSC to which the calling user is homed forwards a short message to the SMSC to which the called user is homed, a final status report should be returned. After the SMSC to which the called user is homed sends a short message, a final status report of the short message is fed back to the SMSC to which the calling user is homed, and the SMSC to which the calling user is homed matches a short message to the final status report and generates charging information for the matched short message.

If the SMSC to which the called user is homed wants to share profit with the SMSC to which the calling user is homed, the two SMSCs both output a statement of account and perform bill checking. Then, the two parties determine a final result according to the bill.

## Claims

1. A method for short message called service, comprising
sending (1) a short message to a called user by a calling user, wherein the short message is submitted to a Short Message Service Center, SMSC, to which the calling user is homed;
**characterised in**,
checking (3) whether the called user is a local user by the SMSC to which the calling user is homed, and if not, forwarding (4), by the SMSC to which the calling user is homed, the short message to the SMSC to which the called user is homed in signaling, wherein a destination address, an address of the SMSC to which the calling user is homed and the short message identification is carried in the signaling;
querying (6) a called service corresponding to the called user and processing (13) the short message according to a query result after receiving the short message by the SMSC to which the called user is homed;
generating, by the SMSC to which the called user is homed, a status report and sending (11) the status report carrying the short message identification to the SMSC to which the calling user is homed according to the address of the SMSC to which the calling user is homed; and
searching, by the SMSC to which the calling user is homed, the corresponding short message according to the short message identification and processing (13) corresponding short message;
wherein, the steps of querying (6) the called service and processing (13) the short message comprise:
sending (63) a query request to a called service management system by the SMSC to which the called user is homed;
querying service information of the called user according to the request and returning (64) the query result to the SMSC to which the called user is homed by the called service management system; and
triggering (65), by the SMSC to which the called user is homed, a called service for processing the short message according to the query result; and
wherein if blacklist information is contained in the service information of the called user, the called service management system queries the blacklist information and determines whether the calling user is in the blacklist information; if yes, the short message is blocked from being delivered by the SMSC to which the called user is homed, otherwise the short message is delivered after its content is filtered according to filter conditions.

2. The method according to claim 1, wherein, the step of forwarding (4) the short message to the an SMSC to which the called user is homed comprises forwarding the short message to the SMSC to which the called user is homed in Mobile Originated, MO, mode; or the forwarding the short message to the SMSC to which the called user is homed comprises forwarding the short message to the SMSC to which the called user is homed in Mobile Terminated, MT, mode.

3. The method according to claim 2, when forwarding the short message to the SMSC to which the called user is homed in MO mode, packing in SMS-SUBMIT command format and forwarding the short message; and when filling the parameters of Transfer Layer, TP, layer protocol, identifying the forwarding by TP_MTI reservation command word.

4. The method according to claim 1, wherein, the step of processing (13) the short message by the SMSC to which the calling user is homed comprises determining, by the SMSC to which the calling user is homed, whether the user sending the short message requires a status report, and if yes, generating the corresponding status report and sending (14) it to the calling user.

5. The method according to claim 2, further comprising: carrying in the signaling the identification code of the address of the SMSC to which the calling user is homed and the short message identification if the SMSC to which the calling user is homed employs trunking mode; and the method further comprises the following steps: generating a status report and sending (11) the status report to the SMSC to which the calling user is homed according to the address of the SMSC to which the calling user is homed and the identification code by the SMSC to which the called user is homed; and searching corresponding short message according to the short message identification and processing (13) the corresponding short message by the SMSC to which the calling user is homed.

6. The method according to claim 2, wherein, the destination address is a called number or an SMSC address.

7. The method according to any one of claims 1 to 6, wherein, the step of processing (13) the short message by the SMSC to which the called user is homed comprises sending the short message to the mobile phone of the called user, or to a forwarded mobile phone or a fixed phone number, or an E-MAIL mailbox, a voice mailbox or a facsimile apparatus specified by the called user, or filtering out or blocking the short message from being forwarded.

8. A short message process system, comprising a Short Message Service Center, SMSC, to which a calling user is homed and an SMSC to which a called user is homed, **characterised in**, the SMSC to which the calling user is homed is configured to check whether the called user is a local user, and if not, forward a short message to the SMSC to which the called user is homed in signaling, wherein a destination address, an address of the SMSC to which the calling user is homed and the short message identification is carried in the signaling; the SMSC to which the called user is homed is configured to query a called service corresponding to the called user after receiving the short message sent by the calling user to the called user, and process the short message according to a query result; the SMSC to which the called user is homed is further configured to generate a status report and send the status report carrying the short message identification to the SMSC to which the calling user is homed according to the address of the SMSC to which the calling user is homed; and the SMSC to which the calling user is homed is further configured to search the corresponding short message according to the short message identification and process the corresponding short message;
wherein, the system further comprises a called service management system, that is configured to receive a query request from the SMSC to which the called user is homed, query service information of the called user according to the request and return the query result to the SMSC to which the called user is homed; and the SMSC to which the called user is homed is further configured to trigger the called service for processing the short message according to the query result; and
wherein if blacklist information is contained in the service information of the called user, the called service management system queries the blacklist information and determines whether the calling user is in the blacklist information; if yes, the short message is blocked from being delivered by the SMSC to which the called user is homed, otherwise the short message is delivered after its content is filtered according to filter conditions.

9. The system according to claim 8, wherein, the called service management system may be set independently, or may be set together with the SMSC to which the called user is homed.

10. The system according to any one of claims 8 to 9, wherein, the system further comprises a short message forwarding gateway, for realizing the forwarding of the short message between the SMSC to which the calling user is homed and the SMSC to which the called user is homed.

## Patentansprüche

1. Verfahren für einen durch Kurznachricht aufgerufenen Dienst, das Folgendes umfasst:
Senden (1) einer Kurznachricht zu einem angerufenen Anwender durch einen anrufenden Anwender, wobei die Kurznachricht an eine Kurznachrichtendienstzentrale, SMSC geliefert wird, bei der der anrufende Anwender heimisch ist;
**gekennzeichnet durch**
Prüfen (3) **durch** die SMSC, bei der der anrufende Anwender heimisch ist, ob der angerufene Anwender ein lokaler Anwender ist, und wenn nicht, Weiterleiten (4) durch die SMSC, bei der der anrufende Anwender heimisch ist, der Kurznachricht zu der SMSC, bei der der angerufene Anwender heimisch ist, **durch** Signalgebung,
wobei in der Signalgebung eine Zieladresse, eine Adresse der SMSC, bei der der anrufende Anwender heimisch ist, und die Kurznachrichtenkennung transportiert werden;
Abfragen (6) eines aufgerufenen Diensts, der dem angerufenen Anwender entspricht, und Verarbeiten (13) der Kurznachricht in Übereinstimmung mit einem Abfrageergebnis nach dem Empfangen der Kurznachricht **durch** die SMSC, bei der der angerufene Anwender heimisch ist;
Erzeugen **durch** die SMSC, bei der der angerufene Anwender heimisch ist, eines Statusberichts und Senden (11) des Statusberichts, der die Kurznachrichtenkennung transportiert, zu der SMSC, bei der der anrufende Anwender heimisch ist, in Übereinstimmung mit der Adresse der SMSC, bei der der anrufende Anwender heimisch ist; und
Suchen **durch** die SMSC, bei der der anrufende Anwender heimisch ist, der entsprechenden Kurznachricht in Übereinstimmung mit der Kurznachrichtenkennung und Verarbeiten (13) der entsprechenden Kurznachricht;
wobei die Schritte des Abfragens (6) des aufgerufenen Diensts und des Verarbeitens (13) der Kurznachricht Folgendes umfassen:
Senden (63) einer Abfrageanforderung zu einem Managementsystem für aufgerufenen Dienst **durch** die SMSC, bei der der angerufene Anwender heimisch ist;
Abfragen von Dienstinformationen des angerufenen Anwenders in Übereinstimmung mit der Anforderung und Zurückleiten (64) des Abfrageergebnisses zu der SMSC, bei der der angerufene Anwender heimisch ist, **durch** das Managementsystem für aufgerufenen Dienst; und
Auslösen (65) **durch** die SMSC, bei der der angerufene Anwender heimisch ist, eines aufgerufenen Diensts für die Verarbeitung der Kurznachricht in Übereinstimmung mit dem Abfrageergebnis; und
wobei dann, wenn in den Dienstinformationen des angerufenen Anwenders Informationen einer schwarzen Liste enthalten sind, das Managementsystem für aufgerufenen Dienst die Informationen der schwarzen Liste abfragt und bestimmt, ob der anrufende Anwender in den Informationen der schwarzen Liste enthalten ist; und
wenn ja, die Ausgabe der Kurznachricht **durch** die SMSC, bei der der angerufene Anwender heimisch ist, blockiert wird, während andernfalls die Kurznachricht ausgegeben wird, nachdem ihr Inhalt in Übereinstimmung mit Filterbedingungen gefiltert worden ist.

2. Verfahren nach Anspruch 1, wobei der Schritt des Weiterleitens (4) der Kurznachricht der SMSC, bei der der angerufene Anwender heimisch ist, das Weiterleiten der Kurznachricht zu der SMSC, bei der der angerufene Anwender heimisch ist, in einem Mobilausgangspunkt-Modus, MO-Modus umfasst; oder der Schritt des Weiterleitens der Kurznachricht zu der SMSC, bei der der angerufene Anwender heimisch ist, das Weiterleiten der Kurznachricht zu der SMSC, bei der der angerufene Anwender heimisch ist, in einem Mobilendpunkt-Modus, MT-Modus, umfasst.

3. Verfahren nach Anspruch 2, wobei dann, wenn das Weiterleiten der Kurznachricht zu der SMSC, bei der der angerufene Anwender heimisch ist, im MO-Modus erfolgt, ein Verpacken im SMS-SUBMIT-Befehlsformat erfolgt und die Kurznachricht weitergeleitet wird; und dann, wenn das Füllen der Parameter des Übertragungsschicht-Schichtprotokolls, TP-Schichtprotokolls erfolgt, das Weiterleiten durch das TP_MTI-Reservierungsbefehlswort identifiziert wird.

4. Verfahren nach Anspruch 1, wobei der Schritt des Verarbeitens (13) der Kurznachricht durch die SMSC, bei der der anrufende Anwender heimisch ist, das Bestimmen durch die SMSC, bei der der anrufende Anwender heimisch ist, ob der Anwender, der die Kurznachricht sendet, einen Statusbericht erfordert, und wenn ja, das Erzeugen des entsprechenden Statusberichts und das Senden (14) desselben zu dem anrufenden Anwender umfasst.

5. Verfahren nach Anspruch 2, das ferner Folgendes umfasst: Transportieren in der Signalgebung des Identifizierungscodes der Adresse der SMSC, bei der der anrufende Anwender heimisch ist, und der Kurznachrichtenkennung, falls die SMSC, bei der der anrufende Anwender heimisch ist, einen Hauptleitungsmodus verwendet; und wobei das Verfahren ferner die folgenden Schritte umfasst: Erzeugen eines Statusberichts und Senden (11) des Statusberichts zu der SMSC, bei der der anrufende Anwender heimisch ist, in Übereinstimmung mit der Adresse der SMSC, bei der der anrufende Anwender heimisch ist, und des Identifizierungscodes durch die SMSC, bei der der angerufene Anwender heimisch ist; und Suchen einer entsprechenden Kurznachricht in Übereinstimmung mit der Kurznachrichtenkennung und Verarbeiten (13) der entsprechenden Kurznachricht durch die SMSC, bei der der anrufende Anwender heimisch ist.

6. Verfahren nach Anspruch 2, wobei die Zieladresse eine angerufene Nummer oder eine SMSC-Adresse ist.

7. Verfahren nach einem der Ansprüche 1 bis 6, wobei der Schritt des Verarbeitens (13) der Kurznachricht durch die SMSC, bei der der angerufene Anwender heimisch ist, das Senden der Kurznachricht zu dem Mobiltelephon des angerufenen Anwenders oder zu einem weitergeleiteten Mobiltelephon oder zu einer Festnetz-Telephonnummer oder zu einer Email-Mailbox oder zu einer Sprach-Mailbox oder zu einem Telefaxgerät, die jeweils durch den angerufenen Anwender spezifiziert werden, oder das Herausfiltern der Kurznachricht oder das Blockieren ihrer Weiterleitung umfasst.

8. Kurznachrichten-Verarbeitungssystem, das eine Kurznachrichtendienstzentrale, SMSC, bei der ein anrufender Anwender heimisch ist, und eine SMSC, bei der ein angerufener Anwender heimisch ist, umfasst, **dadurch gekennzeichnet, dass** die SMSC, bei der der anrufende Anwender heimisch ist, konfiguriert ist, zu prüfen, ob der angerufene Anwender ein lokaler Anwender ist, und wenn nicht, eine Kurznachricht zu der SMSC, bei der der angerufene Anwender heimisch ist, durch Signalgebung weiterzuleiten, wobei in der Signalgebung eine Zieladresse, eine Adresse der SMSC, bei der der anrufende Anwender heimisch ist, und die Kurznachrichtenkennung transportiert werden; die SMSC, bei der der angerufene Anwender heimisch ist, konfiguriert ist, einen aufgerufenen Dienst, der dem angerufenen Anwender entspricht, abzufragen, nachdem die durch den anrufenden Anwender zu dem angerufenen Anwender geschickte Kurznachricht empfangen worden ist, und die Kurznachricht in Übereinstimmung mit einem Abfrageergebnis zu verarbeiten; die SMSC, bei der der angerufene Anwender heimisch ist, ferner konfiguriert ist, einen Statusbericht zu erzeugen und den Statusbericht, der die Kurznachrichtenkennung transportiert, in Übereinstimmung mit der Adresse der SMSC, bei der der anrufende Anwender heimisch ist, zu der SMSC zu senden, bei der der anrufende Anwender heimisch ist; und die SMSC, bei der der anrufende Anwender heimisch ist, ferner konfiguriert ist, die entsprechende Kurznachricht in Übereinstimmung mit der Kurznachrichtenkennung zu suchen und die entsprechende Kurznachricht zu verarbeiten;
wobei das System ferner ein Managementsystem für aufgerufenen Dienst umfasst, das konfiguriert ist, eine Abfrageanforderung von der SMSC, bei der der angerufene Anwender heimisch ist, zu empfangen, Dienstinformationen des angerufenen Anwenders in Übereinstimmung mit der Anforderung abzufragen und das Abfrageergebnis zu der SMSC, bei der der angerufene Anwender heimisch ist, zurückzuleiten; und die SMSC, bei der der angerufene Anwender heimisch ist, ferner konfiguriert ist, den aufgerufenen Dienst für die Verarbeitung der Kurznachricht in Übereinstimmung mit dem Abfrageergebnis auszulösen; und
wobei dann, wenn in den Dienstinformationen des angerufenen Anwenders Informationen einer schwarzen Liste enthalten sind, das Managementsystem für aufgerufenen Dienst die Informationen der schwarzen Liste abfragt und bestimmt, ob der anrufende Anwender in den Informationen der schwarzen Liste enthalten ist; und wenn ja, die Ausgabe der Kurznachricht durch die SMSC, bei der der angerufene Anwender heimisch ist, blockiert wird, während andernfalls die Kurznachricht ausgegeben wird, nachdem ihr Inhalt in Übereinstimmung mit Filterbedingungen gefiltert worden ist.

9. System nach Anspruch 8, wobei das Managementsystem für aufgerufenen Dienst unabhängig festgelegt werden kann oder zusammen mit der SMSC, bei der der angerufene Anwender heimisch ist, festgelegt werden kann.

10. System nach einem der Ansprüche 8 bis 9, wobei das System ferner ein Kurznachrichtenweiterleitungs-Gateway umfasst, um das Weiterleiten der Kurznachricht zwischen der SMSC, bei der der anrufende Anwender heimisch ist, und der SMSC, bei der der angerufene Anwender heimisch ist, auszuführen.

## Revendications

1. Procédé pour service appelé de messages courts, comprenant :
l'envoi (1) d'un message court à un utilisateur appelé par un utilisateur appelant, le message court étant soumis à un Centre de Services de Messages Courts, SMSC, auquel est rattaché l'utilisateur appelant ;
**caractérisé par** :
la vérification (3) si l'utilisateur appelé est un utilisateur local ou non par le SMSC auquel est rattaché l'utilisateur appelant, et dans la négative, l'acheminement (4), par le SMSC auquel est rattaché l'utilisateur appelant, du message court jusqu'au SMSC auquel est rattaché l'utilisateur appelé par signalisation, une adresse destinataire, une adresse du SMSC auquel est rattaché l'utilisateur appelant et l'identification de message court étant contenues dans la signalisation ;
l'interrogation (6) d'un service appelé correspondant à l'utilisateur appelé et le traitement (13) du message court en fonction d'un résultat d'interrogation après la réception du message court par le SMSC auquel est rattaché l'utilisateur appelé ;
la génération, par le SMSC auquel est rattaché l'utilisateur appelé, d'un rapport d'état et l'envoi (11) du rapport d'état contenant l'identification de message court au SMSC auquel est rattaché l'utilisateur appelant en fonction de l'adresse du SMSC auquel est rattaché l'utilisateur appelant ; et
la recherche, par le SMSC auquel est rattaché l'utilisateur appelant, du message court correspondant en fonction de l'identification du message court et le traitement (13) du message court correspondant ;
dans lequel les étapes d'interrogation (6) du service appelé et de traitement (13) du message court comprennent :
l'envoi (63) d'une requête d'interrogation à un système de gestion de service appelé par le SMSC auquel est rattaché l'utilisateur appelé ;
l'interrogation d'informations de service de l'utilisateur appelé en fonction de la requête et le renvoi (64) du résultat d'interrogation au SMSC auquel est rattaché l'utilisateur appelé par le système de gestion de service appelé ; et
le déclenchement (65), par le SMSC auquel est rattaché l'utilisateur appelé, d'un service appelé pour traiter le message court en fonction du résultat d'interrogation ; et
dans lequel si des informations de liste noire sont contenues dans les informations de service de l'utilisateur appelé, le système de gestion de service appelé interroge les informations de liste noire et détermine si l'utilisateur appelant figure ou non dans les informations de liste noire ; dans l'affirmative, le message court est bloqué et n'est pas délivré par le SMSC auquel est rattaché l'utilisateur appelé, dans la négative, le message est délivré après le filtrage de son contenu en fonction de conditions de filtrage.

2. Procédé selon la revendication 1, dans lequel l'étape d'acheminement (4) du message court jusqu'au SMSC auquel est rattaché l'utilisateur appelé comprend l'acheminement du message court jusqu'au SMSC auquel est rattaché l'utilisateur appelé dans un mode de Mobile Demandeur, MO ; ou l'acheminement du message court jusqu'au SMSC auquel est rattaché l'utilisateur appelé comprend l'acheminement du message court jusqu'au SMSC auquel est rattaché l'utilisateur appelé dans le mode Mobile Demandé, MT.

3. Procédé selon la revendication 2, comprenant lors de l'acheminement du message court jusqu'au SMSC auquel est rattaché l'utilisateur appelé en mode MO, la mise en paquet dans un format de commande SMS-SUBMIT et l'acheminement du message court ; et lors du remplissage des paramètres du protocole de couche de Couche de Transfert, TP, l'identification de l'acheminement par le mot de commande de réservation TP_MTI.

4. Procédé selon la revendication 1, dans lequel l'étape de traitement (13) du message court par le SMSC auquel est rattaché l'utilisateur appelant comprend la détermination, par le SMSC auquel est rattaché l'utilisateur appelant, si l'utilisateur qui envoie le message court requiert ou non un rapport d'état, et dans l'affirmative, la génération du rapport d'état correspondant et son envoi (14) à l'utilisateur appelant.

5. Procédé selon la revendication 2, comprenant en outre : l'insertion dans la signalisation du code d'identification de l'adresse du SMSC auquel est rattaché l'utilisateur appelant et de l'identification de message court si le SMSC auquel est rattaché l'utilisateur appelant emploie un mode de partage de ressources ; et le procédé comprenant en outre les étapes suivantes : la génération d'un rapport d'état et l'envoi (11) du rapport d'état au SMSC auquel est rattaché l'utilisateur appelant en fonction de l'adresse du SMSC auquel est rattaché l'utilisateur appelant et du code d'identification par le SMSC auquel est rattaché l'utilisateur appelé ; et la recherche du message court correspondant en fonction de l'identification du message court et le traitement (13) du message court correspondant par le SMSC auquel est rattaché l'utilisateur appelant.

6. Procédé selon la revendication 2, dans lequel l'adresse destinataire est un numéro appelé ou une adresse SMSC.

7. Procédé selon l'une quelconque des revendications 1 à 6, dans lequel l'étape de traitement (13) du message court par le SMSC auquel est rattaché l'utilisateur appelé comprend l'envoi du message court au téléphone portable de l'utilisateur appelé, ou à un numéro de téléphone portable ou numéro de téléphone fixe de transfert, ou à une boîte de courriel, une boîte vocale ou un télécopieur spécifié par l'utilisateur appelé, ou l'élimination par filtrage ou le blocage du message court pour empêcher son acheminement.

8. Système de traitement de messages courts, comprenant un Centre de Services de Messages Courts, SMSC, auquel est rattaché un utilisateur appelant et un SMSC auquel est rattaché un utilisateur appelé, **caractérisé en ce que** le SMSC auquel est rattaché l'utilisateur appelant est configuré pour vérifier si l'utilisateur appelé est ou non un utilisateur local et dans la négative, acheminer un message court au SMSC auquel est rattaché l'utilisateur appelé par signalisation, une adresse destinataire, une adresse du SMSC auquel est rattaché l'utilisateur appelant et l'identification de message court étant contenues dans la signalisation ; le SMSC auquel est rattaché l'utilisateur appelé est configuré pour interroger un service appelé correspondant à l'utilisateur appelé après la réception du message court envoyé par l'utilisateur appelant à l'utilisateur appelé, et traiter le message court en fonction d'un résultat d'interrogation ; le SMSC auquel est rattaché l'utilisateur appelé est configuré en outre pour générer un rapport d'état et envoyer le rapport d'état contenant l'identification de message court au SMSC auquel est rattaché l'utilisateur appelant en fonction de l'adresse du SMSC auquel est rattaché l'utilisateur appelé : et le SMSC auquel est rattaché l'utilisateur appelant est configuré en outre pour rechercher le message court correspondant en fonction de l'identification de message court et traiter le message court correspondant ;
dans lequel le système comprend en outre un système de gestion de service appelé, lequel est configuré pour recevoir une requête d'interrogation depuis le SMSC auquel est rattaché l'utilisateur appelé, interroger des informations de service de l'utilisateur appelé en fonction de la requête et renvoyer le résultat d'interrogation au SMSC auquel est rattaché l'utilisateur appelé ; et le SMSC auquel est rattaché l'utilisateur appelé est configuré en outre pour déclencher le service appelé pour traiter le message court en fonction du résultat d'interrogation ; et
dans lequel si des informations de liste noire sont contenues dans les informations de service de l'utilisateur appelé, le système de gestion de service appelé interroge les informations de liste noire et détermine si l'utilisateur appelant figure ou non dans les informations de liste noire ; dans l'affirmative, le message court est bloqué et n'est pas délivré par le SMSC auquel est rattaché l'utilisateur appelé, dans la négative, le message est délivré après le filtrage de son contenu en fonction de conditions de filtrage.

9. Système selon la revendication 8, dans lequel le système de gestion de service appelé peut être réglé indépendamment, ou peut être réglé avec le SMSC auquel est rattaché l'utilisateur appelé.

10. Système selon l'une quelconque des revendications 8 et 9, comprenant en outre une passerelle d'acheminement de message court, pour réaliser l'acheminement du message court entre le SMSC auquel est rattaché l'utilisateur appelant et le SMSC auquel est rattaché l'utilisateur appelé.
